(19) Europäisches Patentamt
European Patent Office
Office européen des brevets

(11) EP 4 722 305 A1

(12) **EUROPEAN PATENT APPLICATION**

(43) Date of publication:
08.04.2026 Bulletin 2026/15

(21) Application number: 25206814.3

(22) Date of filing: 06.10.2025

(51) International Patent Classification (IPC):
*C09D 11/322* (2014.01)   *C09D 11/326* (2014.01)
*C09D 11/40* (2014.01)

(52) Cooperative Patent Classification (CPC):
C09D 11/322; C09D 11/10; C09D 11/38;
C09D 11/40

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 07.10.2024 JP 2024175977

(71) Applicant: KYOCERA Document Solutions Inc.
Osaka-shi, Osaka 540-8585 (JP)

(72) Inventors:
• FUNAKOSHI, Daichi
Osaka-shi, Osaka, 540-8585 (JP)
• KIDA, Yukari
Osaka-shi, Osaka, 540-8585 (JP)

(74) Representative: Viering, Jentschura & Partner
mbB
Patent- und Rechtsanwälte
Grillparzerstraße 14
81675 München (DE)

(54) **INK, INK SET, INKJET RECORDING METHOD, AND INKJET RECORDING APPARATUS**

(57) An ink includes: a white pigment formed of titanium oxide; a resin binder; a surfactant having an HLB value of 10 or more; and water. In this ink, by blending the resin binder, it is possible to improve the adhesion of a white image to a recording medium. Further, in this ink, by blending a surfactant having an HLB value of 10 or more, high dispersibility of the white pigment formed of titanium oxide in an aqueous solvent is achieved and the dispersed state of the white pigment in the aqueous solvent is easily maintained for a long period of time.

FIG.1

EP 4 722 305 A1

## Description

### Field

The present disclosure relates to an ink, an ink set, an inkjet recording method, and an inkjet recording apparatus.

### Background

Japanese Patent Application Laid-open No. 2013-082885 discloses an inkjet ink for forming a white image on a recording medium. Inkjet inks are desired to have high dispersibility of pigments in an aqueous solvent in order to improve preservation stability and redispersibility. Further, inkjet inks are desired to have high adhesion of an image to a recording medium and high rubfastness of the image formed on the recording medium.

### Summary

According to an embodiment of the present disclosure, there is provided an ink, including: a white pigment formed of titanium oxide; a resin binder; a surfactant having an HLB value of 10 or more; and water.

An ink set according to an embodiment of the present disclosure includes: a first ink; and a second ink.

The first ink includes a first white pigment formed of titanium oxide, a first resin binder, a first surfactant having an HLB value of 10 or more and 11 or less, and water.

The second ink includes a second white pigment formed of titanium oxide, a second resin binder, a second surfactant having an HLB value of 13 or more and 16 or less, and water.

An inkjet recording method according to an embodiment of the present disclosure is a method of forming a white image on a recording medium.

The inkjet recording method includes: ejecting a first ink that includes a first white pigment formed of titanium oxide, a first resin binder, a first surfactant having an HLB value of 10 or more and 11 or less, and water onto the recording medium and then ejecting a second ink that includes a second white pigment formed of titanium oxide, a second resin binder, a second surfactant having an HLB value of 13 or more and 16 or less, and water onto the recording medium.

The inkjet recording apparatus according to an embodiment of the present disclosure is an apparatus that performs a recording operation of forming a white image on a recording medium.

The inkjet recording apparatus includes: a recording unit; and a control unit.

The recording unit includes a first recording head and a second recording head, the first recording head including a first nozzle that ejects a first ink that includes a first white pigment formed of titanium oxide, a first resin binder, a first surfactant having an HLB value of 10 or more and 11 or less, and water onto the recording medium, the second recording head including a second nozzle that ejects a second ink that includes a second white pigment formed of titanium oxide, a second resin binder, a second surfactant having an HLB value of 13 or more and 16 or less, and water onto the recording medium.

The control unit controls, where the recording operation is performed, the recording unit such that the second recording head ejects the second ink onto the recording medium after the first recording head ejects the first ink onto the recording medium.

### Brief Description of Figures

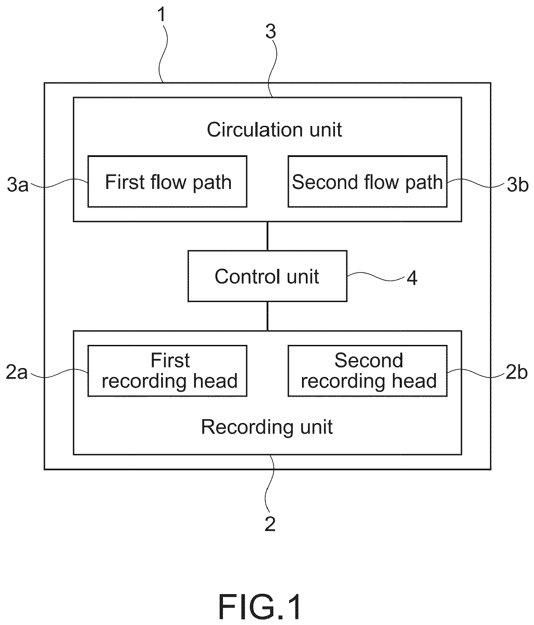

Fig. 1 is a block diagram showing a schematic configuration of an inkjet recording apparatus according to an embodiment of the present disclosure.

### Detailed Description

In the inkjet ink described in the Background, a white inorganic pigment is blended. As the white inorganic pigment, titanium oxide is well known. Titanium oxide achieves high coloration power due to its high refractive index, but makes it difficult to achieve high dispersibility in an aqueous solvent. Further, in the inkjet ink, due to the agglomeration of pigments, the adhesion of an image to a recording medium and the rubfastness of the image formed on the recording medium tend to be reduced.

In view of the circumstances as described above, it is an object of the present disclosure to improve the dispersibility of a white pigment formed of titanium oxide in the ink using the white pigment.

Embodiments of the present disclosure will be described.

[Configuration of ink]

(Schematic configuration)

An ink according to an embodiment of the present disclosure includes a white pigment a, a resin binder b, a surfactant c, and water. The ink according to this embodiment is a water-based ink that is ejected onto a recording medium from a recording head of an inkjet recording apparatus and forms a white image on the recording medium. The recording medium on which a white image is formed by the ink according to this embodiment is typically a non-absorbent recording medium with low ink absorption.

Examples of the non-absorbent recording medium include foil paper, an overhead projector (OHP) sheet, and a plastic recording medium. Examples of the plastic forming a recording medium include polyester, polypropylene, polyethylene, polystyrene, and polyvinyl chloride. At least one surface of the recording medium may be subjected to surface treatment such as corona discharge treatment, plasma treatment, and primer treatment.

In the ink according to this embodiment, the white pigment a can be fixed to a recording medium by blending the resin binder b, and the dispersibility of the white pigment a in an aqueous solvent can be enhanced by blending a surfactant having a large HLB value. Details of each component of the ink according to this embodiment will be described below.

(White pigment a)

In the ink according to this embodiment, fine particles of titanium oxide are used as the white pigment a. As a result, a high-quality white image with high whiteness and high opacity can be formed with the ink according to this embodiment. The primary particle size of the fine particles of titanium oxide used as the white pigment a is favorably 100 nm or more and 500 nm or less, more favorably 150 nm or more and 400 nm or less. Further, the fine particles of titanium oxide used as the white pigment a may be subjected to surface treatment with, for example, silica or alumina. In the ink according to this embodiment, the content of the white pigment a is favorably 5.0 mass% or more and 15.0 mass% or less.

(Resin binder b)

In the ink according to this embodiment, the resin binder b is blended in order to improve the adhesion of a white image to a recording medium. The resin binder b is fine particles formed of a resin. Examples of the resin forming the resin binder b include a (meth)acrylic resin, a styrene resin, a polyvinyl resin, a polyester resin, an amino resin, an epoxy resin, a urethane resin, a polyether resin, a polyamide resin, a phenolic resin, a silicone resin, a fluoropolymer, and a copolymer including monomers of these resins, and it is favorable to use a urethane resin.

In the ink according to this embodiment, the content of the resin binder b is favorably 3 mass% or more from the viewpoint of achieving high adhesion of a white image to a recording medium. Further, in the ink according to this embodiment, the content of the resin binder b is favorably 15 mass% or less from the viewpoint of achieving a high ejection property from a recording head.

(Surfactant c)

The surfactant c blended in the ink according to this embodiment is a nonionic surfactant having an HLB value of 10 or more and high hydrophilicity. In the ink according to this embodiment, since the fine particles of titanium oxide forming the white pigment a is hydrophilic, high dispersibility of the white pigment a in the aqueous solvent is achieved by using the surfactant c having a large HLB value and high hydrophilicity. As a result, in the ink according to this embodiment, the dispersed state of the white pigment a in the aqueous solvent is easily maintained for a long period of time. Further, since the agglomeration of the white pigment a is appropriately suppressed, high adhesion of a white image to a recording medium is achieved and high rubfastness of the white image formed on the recording medium is also achieved.

Examples of the nonionic surfactant that can be used as the surfactant c in the ink according to this embodiment include an acetylene glycol surfactant (surfactant including an acetylene glycol compound), a silicone surfactant (surfactant including a silicone compound), and a fluorosurfactant (surfactant including a fluoropolymer or a fluorine-containing compound). Examples of the acetylene glycol surfactant include an ethylene oxide adduct of acetylene glycol and a propylene oxide adduct of acetylene glycol.

In the ink according to this embodiment, the content of the surfactant c is favorably 0.05 mass% or more from the viewpoint of achieving high dispersibility of the white pigment a in the aqueous solvent, high adhesion of a white image to a recording medium, and high rubfastness of the white image formed on the recording medium. Further, in the ink according to this embodiment, the content of the surfactant c is favorably 0.5 mass% or less from the viewpoint of the ejection property.

(Water)

In the ink according to this embodiment, ion exchanged water, purified water, distilled water, or the like can be used as water. In the ink according to this embodiment, the content of water is favorably 52 mass% or more and 75 mass% or less from the viewpoints of dryness and ejection reliability.

(Other components)

In the ink according to this embodiment, components other than the above may be blended as necessary. For example, in the ink according to this embodiment, a dispersant having the effect of enhancing the dispersibility of the white pigment a in the solvent can be blended. As the dispersant, a pigment dispersion resin, a surfactant, or the like can be used.

The pigment dispersion resin is fine particles of a resin, and is adsorbed on the surface of the white pigment a to constitute a pigment dispersion together with the white pigment a, thereby enhancing the dispersibility of the white pigment a in the solvent. As the pigment coating resin, a styrene-(meth)acrylic resin is favorable. The styrene-(meth)acrylic resin includes a repeating unit derived from at least one monomer of (meth)acrylic acid alkyl ester and (meth)acrylic acid and a styrene unit. Examples of the (meth)acrylic acid alkyl ester include methyl (meth)acrylate, ethyl (meth)acrylate, propyl (meth)acrylate, and butyl (meth)acrylate. As the styrene-(meth)acrylic resin, a copolymer of styrene, methyl methacrylate, methacrylic acid, and butyl acrylate is favorable.

The surfactant blended as a dispersant is blended separately from the surfactant c and reduces the interfacial tension between the white pigment a and the solvent, thereby enhancing the dispersibility of the white pigment a in the solvent. As such a surfactant, for example, a nonionic surfactant or an anionic surfactant can be used.

Further, in addition to the dispersant, various additives such as a water-soluble organic solvent, a dissolution stabilizer, an anti-drying agent, an antioxidant, a viscosity adjustor, a pH adjuster, a neutralizer, and an antifungal agent may be blended as necessary in the ink according to this embodiment.

[Configuration of ink set]

An ink set according to an embodiment of the present disclosure includes a first ink and a second ink. The first ink and the second ink are not mixed, are separately preserved, and separately ejected by different recording heads. The first ink includes a first white pigment a formed of titanium oxide, a first resin binder b, a first surfactant c having an HLB value of 10 or more and 11 or less, and water. The second ink includes a second white pigment a formed of titanium oxide, a second resin binder b, a second surfactant c having an HLB value of 13 or more and 16 or less, and water.

In the ink set according to this embodiment, since each of the first ink and the second ink has a configuration included in the ink according to the above embodiment, high dispersibility of the white pigment a in the aqueous solvent, high adhesion of a white image to a recording medium, and high rubfastness of the white image formed on the recording medium can be achieved. Note that the first white pigment a of the first ink and the second white pigment a of the second ink may have the same configuration or different configurations. Further, the first resin binder b of the first ink and the second resin binder b of the second ink may have the same configuration of different configurations.

In the ink set according to this embodiment, the first surfactant c in the first ink has an HLB value lower than that of the second surfactant c in the second ink, i.e., the hydrophilicity of the first surfactant c is lower. For this reason, in the ink set according to this embodiment, the white pigment a is more likely to agglomerate in the first ink than the second ink. For this reason, in the ink set according to this embodiment, a secondary particle and even higher order particles such as a tertiary particle are likely to form due to the agglomeration of the primary particles of the white pigment a in the first ink than the second ink, and the particle diameter of the pigment dispersion (pigment particle) formed of the white pigment a tends to increase.

In an inkjet recording method using the ink set according to this embodiment, a white image is formed on a recording medium by ejecting the first ink onto the recording medium and then ejecting the second ink onto the recording medium. That is, in the white image formed on the recording medium with the ink set according to this embodiment, a second white layer formed with the second ink is stacked on a first white layer formed with the first ink. In the white image formed with the ink set according to this embodiment, a high concealing rate can be achieved by the first white layer formed with the first ink including the pigment dispersion having a large particle diameter. Further, in the white image formed with the ink set according to this embodiment, high rubfastness can be achieved by the second white layer formed by the second ink including the pigment dispersion having a small particle diameter.

[Inkjet recording apparatus]

An inkjet recording apparatus 1 according to this embodiment is configured to be capable of performing an inkjet recording method using the ink set according to this embodiment. Fig. 1 is a block diagram showing a schematic configuration of the inkjet recording apparatus 1. The inkjet recording apparatus 1 includes a recording unit 2, a circulation unit 3, and a control unit 4. The recording unit 2 includes a first recording head 2a and a second recording head 2b. The circulation unit 3 includes a first flow path 3a and a second flow path 3b.

The first recording head 2a includes a first nozzle that ejects the first ink onto the recording medium. The second recording head 2b includes a second nozzle that ejects the second ink onto the recording medium. The control unit 4 controls, when the inkjet recording apparatus 1 performs a recording operation, the recording unit 2 such that the second recording head 2b ejects the second ink onto the recording medium after the first recording head 2a ejects the first ink onto the recording medium.

The circulation unit 3 is configured such that the first flow path 3a and the second flow path 3b do not pass through the first nozzle of the first recording head 2a and the second nozzle of the second recording head 2b. The circulation unit 3 is configured to be capable of circulating the first ink in the first flow path 3a and circulating the second ink in the second flow path 3b. The control unit 4 controls, when the inkjet recording apparatus 1 does not perform the recording operation, the circulation unit 3 such that the first ink is circulated in the first flow path 3a and the second ink is circulated in the second flow path 3b.

In the inkjet recording apparatus 1 according to this embodiment, since the dispersed state of the white pigment a in the first ink and the second ink is easily maintained, the white pigment a can be redispersed in the first ink and the second ink simply by circulating the first ink and the second ink by the circulation unit 3 without the need to separately provide a stirring device that stirs the first ink and the second ink.

Note that the inkjet recording apparatus 1 is not limited to the above configuration and may be modified as necessary. For example, the inkjet recording apparatus 1 does not necessarily need to include the circulation unit 3. In this case, it is favorable to provide another configuration for redispersing the white pigment a in the first ink and the second ink in the inkjet recording apparatus 1.

[Examples and Comparative Examples]

Inks were prepared and evaluated and ink sets were prepared as Examples and Comparative Examples of the present disclosure.

(Preparation of ink)

First, a pigment dispersion liquid including the white pigment a dispersed in water was prepared. The pigment dispersion liquid was obtained by diluting 75 g of a pigment dispersion resin ("SOLSPERSE (registered trademark) W100" manufactured by The Lubrizol Corporation, non-volatile content: 40 mass%) with 425 g of ion exchanged water, adding 500 g of a white pigment ("JR-804" manufactured by TAYCA Co., Ltd.) thereto, premixing the mixture for 1 hour using a homodisper at a rotational speed of 5000 rpm, and then dispersing the mixture using a bead mill (manufactured by NIPPON COKE & ENGINEERING. CO., LTD.). Note that in the dispersion treatment, the vessel was filled with zirconia beads (0.2 mm$\varphi$) at a filling rate of 80% by volume. Note that the white pigment a and the pigment dispersion resin included in the pigment dispersion liquid constitute the component of the pigment dispersion in each ink. Further, the water included in the pigment dispersion liquid constitutes the component of water in each ink.

Next, inks according to Examples and Comparative Examples were prepared. A pigment dispersion liquid, the resin binder b, the surfactant c, a water-soluble organic solvent d, and water were weighed and added to a beaker, and the content of the beaker was stirred and mixed uniformly using a stirrer ("Three-One Motor BL-600" manufactured by Shinto Scientific Co., Ltd.) at a rotational speed of 400 rpm to obtain an ink. The obtained ink was filtered using a filter (pore size of 5 $\mu$m) to remove foreign substances and coarse particles contained in the mixed solution.

In the Examples and Comparative Examples, resin binders b1 to b3 shown in Table 1 were used as the resin binder b, surfactants c1 to c16 shown in Table 2 were used as the surfactant c, and water-soluble organic solvents d1 and d2 shown in Table 3 were used as the water-soluble organic solvent d. Note that all of the products indicated by the resin binders b1 to b3 are emulsions in which the resin binders b1 to b3 formed of a urethane resin are dispersed in water. The water included in this emulsion constitutes the component of water in each ink.

(Table 1)

| Binder | Production name | Manufacturer |
|--------|-----------------|--------------|
| b1 | SUPERFLEX 210 | DKS Co. Ltd. |
| b2 | SUPERFLEX 130 | DKS Co. Ltd. |
| b3 | SUPERFLEX 420NS | DKS Co. Ltd. |

(Table 2)

| Surfactant | Production name | Manufacturer | HLB value |
|---|---|---|---|
| c1 | OLFINE E1020 | Nissin Chemical Co., Ltd. | 15~16 |
| c2 | OLFINE E1010 | Nissin Chemical Co., Ltd. | 13~14 |
| c3 | NAROACTY CL-120 | SANYO CHEMICAL INDUSTRIES, LTD. | 14.1 |
| c4 | SILFACE SAG-502A | Nissin Chemical Co., Ltd. | 11 |
| c5 | SURFYNOL 485 | Nissin Chemical Co., Ltd. | 17 |
| c6 | NAROACTY CL-400 | SANYO CHEMICAL INDUSTRIES, LTD. | 17.8 |
| c7 | SILFACE SAG-503A | Nissin Chemical Co., Ltd. | 11 |
| c8 | NAROACTY CL-50 | SANYO CHEMICAL INDUSTRIES, LTD. | 10 |
| c9 | SURFYNOL 440 | Nissin Chemical Co., Ltd. | 8 |
| c10 | NAROACTY CL-40 | SANYO CHEMICAL INDUSTRIES, LTD. | 8.9 |
| c11 | OLFINE E1004 | Nissin Chemical Co., Ltd. | 7~9 |
| c12 | SURFYNOL 420 | Nissin Chemical Co., Ltd. | 4 |
| c13 | SURFYNOL DF110D | Nissin Chemical Co., Ltd. | 3 |
| c14 | NAROACTY CL-200 | SANYO CHEMICAL INDUSTRIES, LTD. | 16 |
| c15 | NAROACTY CL-95 | SANYO CHEMICAL INDUSTRIES, LTD. | 13 |
| c16 | NAROACTY CL-85 | SANYO CHEMICAL INDUSTRIES, LTD. | 12.6 |

(Table 3)

| Water-soluble organic solvent | Type |
|---|---|
| d1 | Propylene glycol |
| d2 | Butyl triglycol |

(Evaluation method)

For the inks according to Examples and Comparative Examples, rubfastness and adhesion of a white image and dispersibility of the white pigment a were evaluated.

·Method of evaluating rubfastness of white image

Each ink was applied onto a non-absorbent recording medium (PET film "FE2001" manufactured by FUTAMURA CHEMICAL CO., LTD.) using a bar coater (#02) and then dried at 80°C for 2 minutes to form a white image having a thickness of 6 $\mu$m. The white image formed on the recording medium was rubbed once with a weight of 1000 g. A peeling ratio, which is a ratio of the region from which the white image was peeled off to the entire region rubbed with the weight in the white image, was visually observed. The peeling ratio of the white image was evaluated in accordance with the following criteria A to D. White images with the evaluation of A or B for rubfastness are evaluated to "Pass", and white images with the evaluation of C or D are evaluated to "Fail".

A: 0%
B: exceeding 0% and 5% or less
C: exceeding 5% and 10% or less
D: exceeding 10%

·Method of evaluating adhesion of white image

Each ink was applied onto a non-absorbent recording medium (PET film "FE2001" manufactured by FUTAMURA CHEMICAL CO., LTD.) using a bar coater (#02) and then dried at 80°C for 2 minutes to form a white image having a thickness of 6 $\mu$m. The white image formed on the recording medium was cut with a cutter in a 5 $\times$ 5 grid pattern at 1 mm intervals, and a tape peeling test was conducted by a cross-cut method. Of the 25 squares in the grid pattern of the white image after the tape peeling test, the number of peeled squares was counted. The number of peeled squares in each white image was evaluated in accordance with the following criteria A to D. White images with the evaluation of A or B for adhesion are evaluated to "Pass", and white images with the evaluation of C or D are evaluated to "Fail".

A: 0
B: 1 or more and 4 or less
C: 5 or more and 9 or less
D: 10 or more

·Method of evaluating dispersibility of white pigment a

For the diluted ink obtained by diluting each ink 100 times, the particle diameter of the pigment dispersion formed of the white pigment a was measured using Zetasizer (manufactured by Malvern Panalytical). After that, for the diluted ink allowed to stand in an environment with 60°C for 4 weeks, the particle diameter of the pigment dispersion formed of the white pigment a was measured again. The change rate of the particle diameter of the pigment dispersion in the diluted ink before and after being allowed to stand was calculated. The change rate of the particle diameter of the pigment dispersion in each ink was evaluated in accordance with the following criteria A to D. Inks with the evaluation of A or B for dispersibility are evaluated to "Pass", and inks with the evaluation of C or D are evaluated to "Fail".

A: less than 10%
B: 10% or more and less than 15%
C: 15% or more and less than 20%
D: 20% or more

(Examples 1 to 15)

In Examples 1 to 15, the type and amount of the resin binder b and the surfactant c were varied to prepare inks by the above method. Table 4 shows the compositions of the inks according to Examples 1 to 14. Note that in all of the inks according to Examples 1 to 14, the type and amount of the water-soluble organic solvent d were common.

(Table 4)

| | | Example | | | | | | | | | | | | | | |
|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | 15 |
| Pigment dispersion | | 5 | 5 | 5 | 5 | 5 | 5 | 5 | 5 | 5 | 5 | 5 | 5 | 5 | 5 | 5 |
| Binder | b1 | 3 | 5 | 9 | | | 3 | 3 | 3 | 3 | 9 | 3 | 3 | 3 | 3 | |
| | b2 | | | | 3 | | | | | | | | | | | 5 |
| | b3 | | | | | 3 | | | | | | | | | | 10 |
| Surfactant | c1 | 0.4 | 0.4 | 0.4 | 0.4 | 0.4 | | | | | | | | | | 0.4 |
| | c2 | | | | | | 0.4 | | | | | | | | | |
| | c3 | | | | | | | 0.4 | | | | | | | | |
| | c4 | | | | | | | | 0.4 | 0.05 | 0.5 | | | | | |
| | c5 | | | | | | | | | | | 0.4 | | | | |
| | c6 | | | | | | | | | | | | 0.4 | | | |
| | c7 | | | | | | | | | | | | | 0.4 | | |
| | c8 | | | | | | | | | | | | | | 0.4 | |
| Water-soluble organic solvent | d1 | 25 | 25 | 25 | 25 | 25 | 25 | 25 | 25 | 25 | 25 | 25 | 25 | 25 | 25 | 20 |
| | d2 | 8 | 8 | 8 | 8 | 8 | 8 | 8 | 8 | 8 | 8 | 8 | 8 | 8 | 8 | 4 |
| Water | | 58.6 | 56.6 | 52.6 | 58.6 | 58.6 | 58.6 | 58.6 | 58.6 | 59.0 | 52.5 | 58.6 | 58.6 | 58.6 | 58.6 | 55.6 |

For the inks according to Examples 1 to 15, rubfastness and adhesion of a white image and dispersibility of the white pigment a were evaluated. Table 5 shows the evaluation results of rubfastness and adhesion of a white image and dispersibility of the white pigment a for the inks according to Examples 1 to 15. In all of the inks according to Examples 1 to 15, rubfastness and adhesion of a white image and dispersibility of the white pigment a were evaluated to "Pass".

(Table 5)

| | | Evaluation result | | | | | | | |
| | | Rubfastness | | Adhesion | | Dispersibility | | | |
| | | Evaluation | Peeling ratio (%) | Evaluation | Peeled squares (number) | Evaluation | D0 (nm) | D1 (nm) | Change ratio (%) |
|---|---|---|---|---|---|---|---|---|---|
| Example | 1 | B | 2 | B | 2 | A | 262 | 272 | 4 |
| | 2 | A | 0 | A | 0 | A | 285 | 305 | 7 |
| | 3 | A | 0 | A | 0 | B | 280 | 308 | 10 |
| | 4 | B | 2 | B | 2 | A | 265 | 278 | 5 |
| | 5 | B | 2 | B | 2 | A | 267 | 275 | 3 |
| | 6 | B | 3 | B | 3 | A | 268 | 284 | 6 |
| | 7 | B | 3 | B | 3 | A | 266 | 282 | 6 |
| | 8 | B | 4 | B | 4 | A | 274 | 296 | 8 |
| | 9 | B | 2 | A | 0 | B | 293 | 328 | 12 |
| | 10 | B | 2 | A | 0 | B | 293 | 328 | 12 |
| | 11 | A | 0 | A | 0 | A | 273 | 295 | 8 |
| | 12 | A | 0 | A | 0 | A | 267 | 283 | 6 |
| | 13 | B | 4 | B | 4 | B | 276 | 304 | 10 |
| | 14 | B | 5 | B | 5 | B | 280 | 314 | 12 |
| | 15 | A | 0 | A | 0 | B | 282 | 316 | 12 |

(Comparative Examples 1 to 6)

In Comparative Examples 1 to 6, the configurations of the resin binder b and the surfactant c were varied from those in the Examples to prepare inks by the above method. Table 6 shows the compositions of the inks according to Comparative Examples 1 to 6. Note that in all of the inks according to Comparative Examples 1 to 6, the type and amount of the water-soluble organic solvent d were common to those of the inks according to Examples 1 to 14. The ink according to Comparative Example 1 is different from the inks according to the Examples in that the resin binder b is not blended. The ink according to Comparative Examples 2 to 5 are different from the inks according to the Examples in that surfactants c9 to c13 having an HLB value of less than 10 are used.

(Table 6)

| | | Comparative Example | | | | | |
| | | 1 | 2 | 3 | 4 | 5 | 6 |
|---|---|---|---|---|---|---|---|
| Pigment dispersion | | 5 | 5 | 5 | 5 | 5 | 5 |
| Binder | b1 | | 3 | 3 | 3 | 3 | 3 |

(continued)

| | | Comparative Example | | | | | |
|---|---|---|---|---|---|---|---|
| | | 1 | 2 | 3 | 4 | 5 | 6 |
| Surfactant | c1 | 0.4 | | | | | |
| | c9 | | 0.4 | | | | |
| | c10 | | | 0.4 | | | |
| | c11 | | | | 0.4 | | |
| | c12 | | | | | 0.4 | |
| | c13 | | | | | | 0.4 |
| Water-soluble organic solvent | d1 | 25 | 25 | 25 | 25 | 25 | 25 |
| | d2 | 8 | 8 | 8 | 8 | 8 | 8 |
| Water | | 61.6 | 58.6 | 58.6 | 58.6 | 58.6 | 58.6 |

For the inks according to Comparative Examples 1 to 6, rubfastness and adhesion of a white image and dispersibility of the white pigment a were evaluated. Table 7 shows the evaluation results of rubfastness and adhesion of a white image and dispersibility of the white pigment a for the inks according to Comparative Examples 1 to 6. In the inks according to Comparative Example 1, rubfastness and adhesion of a white image were evaluated to "Fail". This is presumably because in the ink according to Comparative Example 1 in which the resin binder b is not included, the adhesion strength of the white image to the recording medium was insufficient. In all of the inks according to Comparative Examples 2 to 6, rubfastness and adhesion of a white image and dispersibility of the white pigment a were evaluated to "Fail". This is presumably because in the inks according to Comparative Examples 2 to 6 in which the surfactant c has a low HLB value, agglomeration of the white pigment a proceeded excessively.

(Table 7)

| | | Evaluation result | | | | | | | |
|---|---|---|---|---|---|---|---|---|---|
| | | Rubfastness | | Adhesion | | Dispersibility | | | |
| | | Evaluation | Peeling ratio (%) | Evaluation | Peeled squares (number) | Evaluation | D0 (nm) | D1 (nm) | Change ratio (%) |
| Comparative Example | 1 | D | 50 | D | 20 | A | 273 | 278 | 2 |
| | 2 | C | 10 | C | 7 | C | 310 | 360 | 16 |
| | 3 | D | 11 | C | 8 | C | 309 | 355 | 15 |
| | 4 | D | 11 | C | 9 | C | 311 | 364 | 17 |
| | 5 | D | 20 | D | 10 | D | 350 | 455 | 30 |
| | 6 | D | 25 | D | 12 | D | 361 | 487 | 35 |

(Evaluation of ink set)

Inks s1 to s7 constituting the first ink and the second ink of ink sets were prepared by the above method. Table 8 shows the compositions of the inks s1 to s7. Note that in all of the inks s1 to s7, the type and amount of the water-soluble organic solvent d were common to those in the inks according to Examples 1 to 14.

(Table 8)

| | | Ink | | | | | | |
|---|---|---|---|---|---|---|---|---|
| | | s1 | s2 | s3 | s4 | s5 | s6 | s7 |
| Pigment dispersion liquid | | 5 | 5 | 5 | 5 | 5 | 5 | 5 |
| Binder | b1 | 5 | 5 | 5 | 5 | 5 | 5 | 5 |

(continued)

| | | Ink | | | | | | |
| | | s1 | s2 | s3 | s4 | s5 | s6 | s7 |
|---|---|---|---|---|---|---|---|---|
| Surfactant | c4 | | | 0.4 | | | | |
| | c6 | | | | | | 0.4 | |
| | c8 | 0.4 | | | | | | |
| | c12 | | | | | 0.4 | | |
| | c14 | | 0.4 | | | | | |
| | c15 | | | | 0.4 | | | |
| | c16 | | | | | | | 0.4 |
| Water-soluble organic solvent | d1 | 25 | 25 | 25 | 25 | 25 | 25 | 25 |
| | d2 | 8 | 8 | 8 | 8 | 8 | 8 | 8 |
| Water | | 58.6 | 56.6 | 52.6 | 58.6 | 58.6 | 58.6 | 58.6 |

Ink sets S1 to S10 were prepared by combining the first ink and the second ink shown in Table 9. Table 9 shows the HLB value of the first surfactant c used in the first ink and the HLB value of the second surfactant c used in the second ink for each of the ink sets S1 to S10.

(Table 9)

| | | First ink | | Second ink | |
| | | Type | HLB value of first surfactant c | Type | HLB value of second surfactant c |
|---|---|---|---|---|---|
| Ink set | S1 | s1 | 10 | s2 | 16 |
| | S2 | s3 | 11 | s4 | 13 |
| | S3 | s2 | 16 | s1 | 10 |
| | S4 | s1 | 10 | s5 | 10 |
| | S5 | s3 | 11 | s3 | 11 |
| | S6 | s5 | 4 | s5 | 4 |
| | S7 | s5 | 10 | s1 | 10 |
| | S8 | s2 | 16 | s6 | 17.8 |
| | S9 | s7 | 13 | s4 | 13 |
| | S10 | s1 | 10 | s7 | 12.6 |

For the ink sets S1 to S10, rubfastness, adhesion, and a concealing rate of a white image were evaluated.

·Method of evaluating rubfastness of white image

For each of the ink sets S1 to S10, the first ink and the second ink were sequentially ejected onto a recording medium in an environment of 25°C and 50% RH to form a white image on the recording medium . The white image was formed using an image forming apparatus (a line head-mounted inkjet recording apparatus, a tester manufactured by KYOCERA Document Solutions Inc.), and a non-absorbent recording medium (PET film "FE2001" manufactured by FUTAMURA CHEMICAL CO., LTD.) was used as the recording medium. The white image formed on the recording medium was rubbed once with a weight of 1000 g. A peeling ratio (%), which is a ratio of the region from which the white image was peeled off to the entire region rubbed with the weight in the white image, was visually observed. The peeling ratio of each white image was evaluated in accordance with the following criteria A to D.

A: 0%
B: exceeding 0% and 5% or less

C: exceeding 5% and 10% or less
D: exceeding 10%

·Method of evaluating adhesion of white image

For each of the ink sets S1 to S10, the first ink and the second ink were sequentially ejected onto a recording medium in an environment of 25°C and 50% RH to form a white image on the recording medium. The white image was formed using an image forming apparatus (a line head-mounted inkjet recording apparatus, a tester manufactured by KYOCERA Document Solutions Inc.), and a non-absorbent recording medium (PET film "FE2001" manufactured by FUTAMURA CHEMICAL CO., LTD.) was used as the recording medium. The white image formed on the recording medium was cut with a cutter in a 5 × 5 grid pattern at 1 mm intervals, and a tape peeling test was conducted by a cross-cut method. Of the 25 squares in the grid pattern of the white image after the tape peeling test, the number of peeled squares was counted. The number of peeled squares in each white image was evaluated in accordance with the following criteria A to D.

A: 0
B: 1 or more and 4 or less
C: 5 or more and 9 or less
D: 10 or more

·Method of evaluating concealability of white image

For each of the ink sets S1 to S10, the first ink and the second ink were sequentially ejected onto a recording medium in an environment of 25°C and 50% RH to form a 150 mm × 200 mm white solid image on the recording medium. The solid image was formed using an image forming apparatus (a line head-mounted inkjet recording apparatus, a tester manufactured by KYOCERA Document Solutions Inc.), and a non-absorbent recording medium (PET film "FE2001" manufactured by FUTAMURA CHEMICAL CO., LTD.) was used as the recording medium. The recording medium on which the solid image was formed was heated for a certain period of time. After checking that the solid image had dried, the recording medium was placed on concealing rate test paper (black paper) as a base. For the recording medium on the concealing rate test paper, a K value $k0$ of the region in which no solid image is formed (base region) and a K value $k1$ of the region in which a solid image is formed (image forming region) were measured using a portable reflection densitometer RD-19 (manufactured by GretagMacbeth LLC). For each of the ink sets S1 to S10, the concealing rate was calculated using the following formula on the basis of the obtained K values $k0$ and $k1$.

$$\text{Concealing rate (\%)} = 100 \times (1 - k1/k0)$$

The concealing rate of each solid image was evaluated in accordance with the following criteria A to C.

A: exceeding 85%
B: exceeding 80% and 85% or less
C: 80% or less

Table 10 shows the evaluation results of rubfastness, adhesion, and concealability of a white image for the ink sets S1 to S10. In the ink sets S1 and S2 in which the first surfactant c in the first ink has an HLB value of 10 or more and 11 or less and the second surfactant c in the second ink has an HLB value of 13 or more and 16 or less, rubfastness, adhesion, and concealability of a white image were evaluated as A. On the other hand, in the ink sets S3 to S10 in which at least one of the condition that the first surfactant c in the first ink has an HLB value of 10 or more and 11 or less or the condition that the second surfactant c in the second ink has an HLB value of 13 or more and 16 or less is not satisfied, at least one of rubfastness, adhesion, or concealability of a white image was evaluated as B, C, or D.

EP 4 722 305 A1

(Table 10)

| | | Rubfastness | | Adhesion | | Concealability | |
|---|---|---|---|---|---|---|---|
| | | Evaluation | Peeling ratio (%) | Evaluation | Peeled squares (number) | Evaluation | Concealing ratio (%) |
| Ink set | S1 | A | 0 | A | 0 | A | 87 |
| | S2 | A | 0 | A | 0 | A | 86 |
| | S3 | B | 4 | A | 0 | A | 88 |
| | S4 | D | 15 | C | 5 | A | 89 |
| | S5 | B | 3 | B | 3 | A | 88 |
| | S6 | D | 20 | D | 10 | A | 90 |
| | S7 | C | 10 | D | 10 | A | 89 |
| | S8 | A | 0 | A | 0 | B | 82 |
| | S9 | A | 0 | A | 0 | B | 84 |
| | S10 | B | 3 | A | 0 | A | 88 |

**Claims**

1. An ink, comprising:

   a white pigment formed of titanium oxide;
   a resin binder;
   a surfactant having an HLB value of 10 or more; and
   water.

2. The ink according to claim 1, wherein
   a content of the resin binder is 3 mass% or more and 15 mass% or less.

3. An ink set, comprising:

   a first ink that includes a first white pigment formed of titanium oxide, a first resin binder, a first surfactant having an HLB value of 10 or more and 11 or less, and water; and
   a second ink that includes a second white pigment formed of titanium oxide, a second resin binder, a second surfactant having an HLB value of 13 or more and 16 or less, and water.

4. An inkjet recording method of forming a white image on a recording medium, comprising:
   ejecting a first ink that includes a first white pigment formed of titanium oxide, a first resin binder, a first surfactant having an HLB value of 10 or more and 11 or less, and water onto the recording medium and then ejecting a second ink that includes a second white pigment formed of titanium oxide, a second resin binder, a second surfactant having an HLB value of 13 or more and 16 or less, and water onto the recording medium.

5. The inkjet recording method according to claim 4, wherein
   the recording medium is a non-absorbent recording medium.

6. An inkjet recording apparatus (1) that performs a recording operation of forming a white image on a recording medium, comprising:

   a recording unit (2) that includes a first recording head (2a) and a second recording head (2b), the first recording head (2a) including a first nozzle that ejects a first ink that includes a first white pigment formed of titanium oxide, a first resin binder, a first surfactant having an HLB value of 10 or more and 11 or less, and water onto the recording medium, the second recording head (2b) including a second nozzle that ejects a second ink that includes a second white pigment formed of titanium oxide, a second resin binder, a second surfactant having an HLB value of

13

13 or more and 16 or less, and water onto the recording medium; and
a control unit (4) that controls, where the recording operation is performed, the recording unit (2) such that the second recording head (2b) ejects the second ink onto the recording medium after the first recording head (2a) ejects the first ink onto the recording medium.

7. The inkjet recording apparatus (1) according to claim 6, wherein
the recording medium is a non-absorbent recording medium.

8. The inkjet recording apparatus (1) according to claim 6 or 7, further comprising:

a circulation unit (3) that includes a first flow path and a second flow path that are independent of each other and do not pass through the first nozzle and the second nozzle and is configured to be capable of circulating the first ink in the first flow path and circulating the second ink in the second flow path,
the control unit (4) controlling, where the recording operation is not being performed, the circulation unit (3) such that the first ink is circulated in the first flow path and the second ink is circulated in the second flow path.

FIG.1

EUROPEAN SEARCH REPORT

Application Number

EP 25 20 6814

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/210900 A1 (OHASHI MASAKAZU [JP] ET AL) 31 July 2014 (2014-07-31) | 1,2 | INV. C09D11/322 C09D11/326 C09D11/40 |
| A | * claims; par. 52-54, 114, 148-166 * | 3-8 | |
| X | JP 2019 157058 A (RICOH CO LTD) 19 September 2019 (2019-09-19) | 1,2 | |
| A | * claims; par. 3, 9, 39, 58-62, 67; example in par. 92 * | 3-8 | |
| X | US 2022/411999 A1 (SHIRAISHI TETSUYA [JP] ET AL) 29 December 2022 (2022-12-29) | 1,2 | |
| A | * claims; par. 220-223, 224-248 * | 3-8 | |
| X | JP 2024 107860 A (RISO KAGAKU CORP) 9 August 2024 (2024-08-09) | 1,2 | |
| A | * claims; par. 45-46, 63-66, 77-80, 114-134 * | 3-8 | |
| X | JP 2024 037025 A (SAKATA INKS) 18 March 2024 (2024-03-18) | 1,2 | |
| A | * claims; par. 35, 98-103, 116-127 * | 3-8 | TECHNICAL FIELDS SEARCHED (IPC) |
| X | US 2024/228811 A1 (FUNAKOSHI DAICHI [JP]) 11 July 2024 (2024-07-11) | 1,2 | C09D |
| A | * claims; par. 22-23, 37, 40, 57, 85-94 * | 3-8 | |

The present search report has been drawn up for all claims

| Place of search | Date of completion of the search | Examiner |
|---|---|---|
| Munich | 3 February 2026 | von Zitzewitz, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 20 6814

This annex lists the patent family members relating to the patent documents cited in the above-mentioned European search report.
The members are as contained in the European Patent Office EDP file on
The European Patent Office is in no way liable for these particulars which are merely given for the purpose of information.

03-02-2026

| Patent document cited in search report | | | Publication date | Patent family member(s) | | | Publication date |
|---|---|---|---|---|---|---|---|
| US 2014210900 | A1 | | 31-07-2014 | JP | 6102288 | B2 | 29-03-2017 |
| | | | | JP | 2014148563 | A | 21-08-2014 |
| | | | | US | 2014210900 | A1 | 31-07-2014 |
| | | | | US | 2017355200 | A1 | 14-12-2017 |
| JP 2019157058 | A | | 19-09-2019 | JP | 7013967 | B2 | 01-02-2022 |
| | | | | JP | 2019157058 | A | 19-09-2019 |
| US 2022411999 | A1 | | 29-12-2022 | CN | 115538197 | A | 30-12-2022 |
| | | | | JP | 7724091 | B2 | 15-08-2025 |
| | | | | JP | 2023005600 | A | 18-01-2023 |
| | | | | US | 2022411999 | A1 | 29-12-2022 |
| JP 2024107860 | A | | 09-08-2024 | NONE | | | |
| JP 2024037025 | A | | 18-03-2024 | EP | 4585658 | A1 | 16-07-2025 |
| | | | | JP | 2024037025 | A | 18-03-2024 |
| | | | | US | 2025361676 | A1 | 27-11-2025 |
| | | | | WO | 2024053209 | A1 | 14-03-2024 |
| US 2024228811 | A1 | | 11-07-2024 | CN | 118325392 | A | 12-07-2024 |
| | | | | JP | 2024098517 | A | 24-07-2024 |
| | | | | US | 2024228811 | A1 | 11-07-2024 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013082885 A